(19) Europäisches Patentamt
European Patent Office
Office européen des brevets

(11) Publication number: **0 533 202 A1**

# (12) EUROPEAN PATENT APPLICATION

(21) Application number: **92116040.4**

(22) Date of filing: **18.09.92**

(51) Int. Cl.5: **C08J 9/14**, //C08L75/04, C08L83/12

(30) Priority: **20.09.91 US 763357**

(43) Date of publication of application: **24.03.93 Bulletin 93/12**

(84) Designated Contracting States: **AT BE DE FR GB IT**

(71) Applicant: **UNION CARBIDE CHEMICALS & PLASTICS TECHNOLOGY CORPORATION**
**39 Old Ridgebury Road**
**Danbury, Connecticut 06817-0001(US)**

(72) Inventor: **Lewis, Kenrick Martin**
**98-40 57th Avenue**
**Rego Park, New York 11368(US)**
Inventor: **Landon, Shayne Joseph**
**1402 Kings Way**
**Carmel, New York 10512(US)**
Inventor: **Fis, Joelle**
**34 ch. de la Planche Brulee, Apt. 139**
**F-01210 Ferney-Voltaire(FR)**

(74) Representative: **von Hellfeld, Axel, Dr. Dipl.-Phys.**
**Wuesthoff & Wuesthoff Patent- und Rechtsanwälte Schweigerstrasse 2**
**W-8000 München 90 (DE)**

## (54) Use of capped surfactants for production of rigid polyurethane foams blown with hydrochlorofluorocarbons.

(57) Composition and process for production of rigid polyurethane and polyisocyanurate foam, and foam made from such composition and by such process. A composition for production of rigid polyurethane foam includes a) an organic compound containing at least 1.8 isocyanate-reactive groups per molecule; b) an organic polyisocyanate selected from the group consisting of: b1) alkyl or cycloalkyl polyisocyanates having at least two isocyanate groups, and in which the alkyl portion contains 2-6 carbon atoms; and b2) aromatic polyisocyanates containing at least 2 isocyanate groups, and at least two six-membered aromatic rings which are fused together or are joined by a carbon-carbon bond or are linked by a divalent linkage selected from the group consisting of alkylene groups of 1-6 carbon atoms, -O-, -CO-, $-CO_2-$, -S-, and $-SO_2-$; c) a catalytically effective amount of a catalyst capable of promoting formation of urethane bonds; d) an effective amount of a hydrochlorofluorocarbon blowing agent; and e) a foam stabilizing amount of a hydrolytically stable siloxane-oxyalkylene block copolymer surfactant containing capped hydroxyl groups in the oxyalkylene portion of the molecule. A process for making rigid polyurethane foam involves reacting and foaming such composition.

EP 0 533 202 A1

## FIELD OF THE INVENTION

This invention relates to polyurethane foams, and more particularly, to use of capped siloxane-polyether copolymers for stabilization of closed-cell rigid polyurethane foams blown with hydrochlorofluorocarbons (HCFCs) such as HCFC-123, HCFC-141b, and HCFC-22.

## BACKGROUND OF THE INVENTION

Because of their closed cell structures, most rigid polyurethane (PUR) and polyisocyanurate (PIR) foams are used for thermal insulation applications such as roofing, sheathing, and in appliances. Chlorofluorocarbons like CFC-11 are commonly used as blowing agents in these foams because the low thermal conductivity of the CFC-11 vapor encapsulated in the foam cells provides insulating foams having a lower thermal conductivity than air or carbon dioxide-containing foams.

As a consequence of the ozone depletion and the global warming effect associated with chlorofluorocarbon use, manufacturers of rigid foams have been searching for alternative blowing agents. Commercially available HCFCs like $CF_3CHCl_2$ (HCFC-123), $CCl_2FCH_3$ (HCFC-141b), and and $HCClF_2$ (HCFC-22) appear at present to be the most suitable substitutes.

The main drawback of HCFC-123 and HCFC-141b is that they are more soluble in the polymer matrix than presently-used blowing agents, thereby causing a plasticizing effect which adversely affects the physical properties of the foams, as shown by decreased compressive strength and dimensional stability, and sometimes, by coarser foam cell size. HCFC-22 (normal boiling point, -40 °C) is a gas under ambient conditions. It is also quite soluble in polyurethane raw materials, but not sufficiently soluble to permit its use as the sole blowing agent for polyisocyanurate foams. Losses during foaming occur as a result of the high heat of the polyurethane and polyisocyanurate reactions. Loss is manifested as excessive frothing during foam processing. Additionally, streaking patterns caused by poor compatibilization of the reactants, void formation and a high open cell content are typically observed in the resulting foams.

It would be desirable to have a composition for rigid polyurethane foam which can be blown with HCFCs and yet produce a product which does not suffer appreciably from the above-described deficiencies. Such a composition is the subject of the present application.

Prior art references dealing with HCFC-blown rigid polyurethane foams made using silicone polyether copolymer surfactants have generally not mentioned specific surfactants or surfactant types to be used. In the few instances reported in the literature, the silicone surfactants DC-5103 and DC-193 (commercially available from Air Products) as well as B-8421 and B-8444 (commercially available from Goldschmidt) have been identified. These surfactants are synthesized with uncapped polyethers.

Conventional rigid polyurethane foams blown with CFCs such as $FCCl_3$ (CFC-11) are generally manufactured using silicone polyether copolymer surfactants containing uncapped polyether units since such polyethers are more easily and economically prepared than capped polyethers, and the silicone surfactants containing uncapped polyethers usually afford the optimum foams. Silicone polyether copolymer surfactants containing capped polyether units have, however, been used in conventional rigid polyurethane foam manufacture, for example, to reduce the viscosity of the isocyanate component of the foam and provide a storage-stable isocyanate mixture, or to facilitate solubilization of the surfactant and other ingredients in the polyol component of the reaction mixture.

The surfactant L-5340, a Union Carbide product which is a silicone polyether copolymer containing methyl-capped polyether moieties, was used in 1976 in HCFC-blown formulations in a study designed to demonstrate that HCFCs were potentially viable substitutes for CFC blowing agents. See Dishart, K.T., J.A. Creazzo, M.R. Ascough, Proceedings of the FSK/SPI, (Sept.29-Oct.2), 1987, Aachen, FRG; Lund,E.A.E., R.G. Richard, I.R. Shankland, Proceedings of the SPI-31st Annual Technical/Marketing Conference, (Oct. 18-21), 1988, Philadelphia, PA. The L-5340 material was the only surfactant used in these studies and no comparative performance data on other surfactants were provided. Further, the foam mixture used for the study in the Dishart publication was based on toluene diisocyanate and an experimental urea polyol which has apparently never been commercially available. Accordingly, this study suggests nothing concerning the sorts of foam compositions or surfactants which should be used for manufacture of HCFC-blown rigid polyurethane foams.

## SUMMARY OF THE INVENTION

The present invention provides a composition for HCFC-blown rigid polyurethane foam and a process for manufacture of such foam, in which use of a capped silicone polyether copolymer surfactant in foam

manufacture overcomes the above-discussed disadvantages of HCFCs and imparts excellent physical properties to the resultant HCFC-blown foams. In particular, the capped silicone surfactants provide improved foam compressive strength, dimensional stability, and finer cells than uncapped surfactants, while maintaining low K-factor and high foam flowability. The capped silicone surfactants also improve the processing of HCFC-blown foams by compatibilizing the foam raw materials during mixing and promoting the retention of the blowing agents in the reaction mixture during this mixing. These actions help to eliminate streaks and other signs of inhomogeneity in the foams and also reduce the formation of voids and open cells in closed-cell foams. These advantages are realized in all types of rigid polyurethane foams, such as closed-cell PIR, PUR, and mixed PUR/PIR foams, including appliance and boardstock foams used for spraying, roofing, insulation, etc., and are quite pronounced in comparison with those of foams made with uncapped copolymers.

The present invention provides a composition for production of rigid polyurethane foam, this composition comprising:

a) an organic compound containing at least 1.8 isocyanate-reactive groups per molecule;

b) an organic polyisocyanate selected from the group consisting of

b1) alkyl or cycloalkyl polyisocyanates having at least two isocyanate groups, and in which the alkyl portion contains 2-6 carbon atoms; and

b2) aromatic polyisocyanates containing at least 2 isocyanate groups, and at least two six-membered aromatic rings which are fused together or are joined by a carbon-carbon bond or are linked by a divalent linkage selected from the group consisting of alkylene groups of 1-6 carbon atoms, -O-, -CO-, $-CO_2-$, -S-, and $-SO_2-$;

c) a catalytically effective amount of a catalyst capable of promoting formation of urethane bonds;

d) an effective amount of a hydrochlorofluorocarbon blowing agent; and

e) a foam stabilizing amount of a hydrolytically stable siloxane-oxyalkylene block copolymer surfactant containing capped hydroxyl groups in the oxyalkylene portion of the molecule.

Correspondingly, a method for production of rigid polyurethane foam comprises reacting and foaming a reaction mixture containing the above-listed ingredients.

## DETAILED DESCRIPTION OF THE INVENTION

Polyurethane and polyisocyanurate foams are prepared by mixing together an organic polyisocyanate and a polyol containing at least 1.8 hydroxyl groups, and thereafter foaming the mixture in the presence of a catalyst and a foam stabilizer by means of a blowing agent.

This invention provides foam formulations which are suitable for the production of rigid polyurethane, and polyisocyanurate foams, and semi-rigid flexible polyurethane foams. They may be used in the any of the methods known for preparing polyurethane and polyisocyanurate foams, such as the one-shot, the semi-prepolymer and the prepolymer techniques.

In addition to the ingredients listed above, the formulations of the invention can also contain water or an inert gas other than a hydrochlorofluorocarbon as a blowing agent. Other additives such as flame retardants, plasticizers, antioxidants, and other fillers and pigments may also be included in the foam formulations.

The final foam formulation contains all the above-listed ingredients regardless of the order of mixing in the process steps which precede the foam developing reaction. That is, the final combination of ingredients in the foam formulation is independent of the process (one-shot, semi-prepolymer or prepolymer) even though the order of addition or partial reactions between some ingredients may differ from one process to another.

The relative amounts of isocyanate-reactive compound(s), isocyanate(s), catalyst(s), and blowing agent-(s) to be used in foam formulations are well known in the art and depend upon the process employed (one-shot, semi-polymer, or prepolymer) and the type of foam desired (rigid or semi-rigid).

The relative amounts of hydrolytically stable siloxane-oxyalkylene block copolymer or mixture of such copolymers used in the formulations of this invention is discussed hereinbelow.

Suitable isocyanate-reactive compounds include polyols, polyamines, polyacids, polymercaptans, and like compounds. Preferred isocyanate-reactive compounds are the polyester and polyether polyols.

### POLYOLS

The polyether polyols which are used in preparing the polyurethane foams include the linear and branched chain polyethers which have a plurality of acyclic ether oxygens and contain at least 1.8 isocyanate-reactive groups, and preferably 3 or more (e.g. 4-8). The polyethers have molecular weights,

based on their hydroxyl value, ranging from 250 to 7500.

Illustrative polyether polyols include the polyoxyalkylene polyols containing one or more chains of connected oxyalkylene groups which are prepared by the reaction of one or more alkylene oxides with acyclic and alicyclic polyols. Examples of the polyoxyalkylene polyols include the polyoxyethylene glycols prepared by the addition of ethylene oxide to water, ethylene glycol, or dipropylene glycol; polyoxypropylene glycols prepared by the addition of propylene oxide to water, propylene glycol, or dipropylene glycol; mixed oxyethyleneoxypropylene polyglycols prepared in a similar manner utilizing a mixture of ethylene oxide and propylene oxide; and the polyoxybutylene glycols and copolymers such as polyoxyethyleneoxybutylene glycols and polyoxypropyleneoxybutylene glycols. Included in the term "polyoxybutylene glycols" are polymers of 1,2-butylene oxide, 2,3-butylene oxide and 1,4-butylene oxide.

Other acyclic and alicyclic polyols which can be reacted with ethylene oxide, propylene oxide, butylene oxide or mixtures thereof to provide useful polyethers include glycerol, trimethylolpropane, 1,2,6-hexanetriol, pentaerythritol, sorbitol, glycosides, such as methyl, ethyl, propyl, butyl and 2-ethylhexyl arabinoside, xyloside, fructoside, glucoside, rhammoside, and the like, and polyethers prepared by the reaction alkylene oxides with sucrose.

Further possible polyether polyols are prepared by reacting a 1,2-alkylene oxide such as ethylene oxide, propylene oxide, butylene oxide or mixtures thereof with mononuclear polyhydroxybenzenes such as resorcinol, pyrogallol, phloroglucinol, hydroquinone, and the like; and polyether polyols prepared by reacting 1,2-alkylene oxides or mixtures thereof with fused ring systems such as 3-hydroxy-2-naphthol; 6,7-dihydroxy-1-naphtol; 2,5-dihydroxy-1-naphthol; and the like.

Other polyether polyols which can be employed are those obtained by reacting 1,2-alkylene oxides or mixtures thereof with polynuclear hydroxybenzenes such as the various di, tri- and tetraphenylol compounds in which two to four hydroxybenzene groups are attached by means of single bonds or by an aliphatic hydrocarbon radical containing one to twelve carbon atoms. The term "polynuclear" as distinguished from "mononuclear" is used to designate at least two benzene nuclei in a compound.

Exemplary diphenylol compounds include 2,2-bis(p-hydroxyphenyl)propane; bis(p-hydroxyphenyl)-methane and the various diphenols and diphenylol methanes disclosed in United States Patents 2,506,486 and 2,744,882, respectively.

Exemplary triphenylol compounds which can be employed include the alpha, alpha, omega-tris-(hydroxyphenyl)-alkanes such as:
1,1,3-tris(hydroxyphenyl)ethanes;
1,1,3-tris(hydroxy-3-methylphenyl)propanes;
1,1,3-tris(dihydroxy-3-methylphenyl)propanes;
1,1,3-tris(hydroxy-2,4-dimethylphenyl)propanes;
and the like.

Tetraphenylol compounds which can be reacted with 1,2-alkylene oxides include the alpha, alpha, omega, omega-tetrakis(hydroxyphenyl)alkanes such as 1,1,2,2-tetrakis(hydroxyphenyl)ethanes; 1,1,3,3-tetrakis(hydroxy-3-methylphenyl)propanes; 1,1,3,3-tetrakis(dihydroxy-3-methylphenyl)propanes; 1,1,4,4-tetrakis(hydroxyphenyl)butanes; 1,1,4,4-tetrakis(hydroxyphenyl)-2-ethylbutanes; 1,1,5,5-tetrakis-(hydroxyphenyl)-3-methylpentanes; 1,1,5,5-tetrakis(dihydroxyphenyl)pentanes; 1,1,8,8-tetrakis(hydroxy-2,5-dimethylphenyl)octanes; and the corresponding compounds which contain substituent groups in the hydrocarbon chain such as 1,1,6,6-tetrakis(hydroxyphenyl)-2-hydroxyhexanes; 1,1,6,6-tetrakis(hydroxyphenyl)-2-hydroxy-5-methylhexanes; 1,1,7,7-tetrakis(hydroxyphenyl)-3-hydroxyheptanes; and the like.

Other particularly useful polyethers which can be employed are the ethylene oxide, propylene oxide and butylene oxide adducts of phenolformaldehyde condensation product material such as the Novolaks™.

Novolaks™ are mixtures of polynuclear compounds of the diphenylmethane type of structure such as, 4,4'-dihydroxydiphenylmethane and 2,4'-dihydroxydiphenylmethane. Such compounds are free from methylol groups and are formed by the Baeyer reaction of phenol and formaldehyde. In a typical synthesis, Novolaks™ are prepared by condensing one mole of phenolic compound, such as phenol or cresol, with 0.8 mole of an aldehyde, such as formaldehyde or furfural, under acid conditions at a temperature about 160 °C to 170 °C. The polynuclear products frequently contain four to eight units and can contain twelve or more units. Novolaks™, as such, are noncurable thermoplastic resins.

Further exemplary polyether polyols are materials prepared by reacting one or more of the alkylene oxides above noted with acyclic polyamines such as ethylenediamine, propylenediamine, butylenediamine, pentylenediamine, hexylenediamine, octylenediamine, nonylenediamine, decylenediamine, polyalkylene polyamines such as diethylenetriamine, triethylenetriamine, tetraethylenepentamine, dipropylenetriamine and the like. A particularly suitable polyether is the propylene oxide addition product of diethylenetriamine.

Other suitable polyether polyols include the 1,2-alkylene oxide derivatives of mononuclear primary amines such as o-,m-, and p-phenylenediamine; 2,4- and 2,6-diaminotoluene; 2,6-diamino-p-xylene; 4,6-diamino-m-xylene; 2,4-diamino-m-xylene; 3.5-diamino-o-xylene; isohexyl-p-phenylenediamine; 3,5-diaminotoluene, and the like; polynuclear and fused aromatic polyamines such as 1,4-naphthylenediamine; 1,5-naphthalenediamine; 1,8-naphthalenediamine; benzidine, toluidine; 4,4'-methylenedianiline; 3,3'-dimethoxyl-4,4'-biphenyldiamine; 3,3'-dichloro-4,4'-biphenyldiamine; 3,3'-dimethyl-4,4'-biphenyldiamine; 4,4'-ethylenedianiline; and 4,4'-ethylidenedianiline.

Higher functional mono- and polynuclear polyamines which also can be reacted with 1,2-alkylene oxides to provide useful polyether starting materials include 2,4,6-triaminotoluene; 2,3,5-triaminotoluene; 5,6-diaminoacenaphthene, 4,4',4''-methylidynetrianiline, 3,5-diaminobenzoic acid, triaminodiphenyl ethers, and sulfides such as 2,4,4'-triaminodiphenyl ether; 2,3',4-triamino-4'-methyldiphenyl ether; 2,3',4-triamino-4'-methoxydiphenylether; and polyamines obtained by interaction of aromatic monoamines with formaldehyde or other aldehydes.

The polyester polyols are prepared by known procedures from a polycarboxylic acid or acid derivative, such as an anhydride or ester of the polycarboxylic acid, and a polyhydric alcohol. The acids and/or alcohols may, of course, be used as mixtures of two or more compounds in the preparation of the polyester polyols. Particularly suitable polyester polyols are aromatic polyester polyols containing phthalic acid residues.

The polycarboxylic acid component, which is preferably dibasic, may be aliphatic, cycloaliphatic, aromatic and/or heterocyclic and may optionally be substituted, for example, by halogen atoms, and/or may be unsaturated. Examples of suitable carboxylic acids and derivatives thereof for the preparation of the polyester polyols include: succinic acid; adipic acid; pimelic acid; suberic acid; azelaic acid; phthalic acid; isophthalic acid; terephthalic acid; phthalic acid anhydride; tetrahydrophthalic acid anhydride; tetrachlorophthalic acid anhydride; glutaric acid anhydride; maleic acid; maleic acid anhydride; fumaric acid; dibasic and tribasic unsaturated fatty acids optionally mixed with monobasic unsaturated fatty acids, such as oleic acid; terephthalic acid dimethyl ester, and terephthalic acid-bis-glycol ester.

Any suitable polyhydric alcohol may be used in preparing the polyester polyols. The polyols can be aliphatic, cycloaliphatic, aromatic and/or heterocyclic, and are preferably selected from the group consisting of diols, triols and tetrols. Aliphatic dihydric alcohols having no more than about 20 carbon atoms are highly satisfactory. The polyols optionally may include substituents which are inert in the reaction, for example, chlorine and bromine substituents, and/or may be unsaturated. Suitable amino alcohols, such as, for example, monethanolamine, diethanolamine, triethanolamine, or the like may also be used. Moreover, the polycarboxylic acid(s) may be condensed with a mixture of polyhydric alcohols and amino alcohols.

Further examples of suitable polyhydric alcohols include: ethylene glycol; propylene glycol-(1,2) and octane diol-(1,8); 2-methyl-1, 3-propane diol; trimethylolpropane; pentaerythritol; sorbitol; diethylene glycol and higher polyethylene glycols; dipropylene glycol and higher polypropylene glycols; as well as dibutylene glycol and higher polybutylene glycols. Especially suitable polyols are oxyalkylene glycols such as diethylene glycol, dipropylene glycol, triethylene glycol, tripropylene glycol, tetraethylene glycol, tetrapropylene glycol, trimethylene glycol and tetramethylene glycol.

The term "polyester polyol" as used in this specification includes any minor amounts of unreacted polyol remaining after the preparation of the polyester polyol, and/or unesterified polyol added after the preparation.

The polyester polyols of the invention advantageously contain at least 1.8 hydroxyl groups and generally have an average equivalent weight of from about 75 to 500. Preferably, the polyesters contain from about 1.8 to 8 hydroxyl groups had have an average equivalent weight of from about 100 to 300, more preferably from about 120 to 250. Highly desirable aromatic polyester polyols of the invention have an average functionality of about 1.8 to 5, preferably about 2 to 2.5. Polyesters whose acid component comprises at least about 30% by weight of phthalic acid residues are particularly useful.

Particularly suitable compositions containing phthalic acid residues for use in the invention are (a) ester-containing by-products from the manufacture of dimethylterephthalate, (b) scrap polyalkylene terephthalates, (c) phthalic anhydride, (d) residues from the manufacture of phthalic anhydride, (e) terephthalic acid, (f) residues from the manufacture of terephthalic acid, (g) isophthalic acid and (h) trimellitic anhydride. These compositions may be converted to polyester polyols through conventional transesterification or esterification procedures.

While the polyester polyols can be prepared from substantially pure reactant materials, more complex ingredients are advantageously used, such as sidestream, waste or scrap residues from the manufacture of phthalic acid, terephthalic acid, dimethyl terephthalate, polyethylene terephthalate, adipic acid and the like. Suitable polyol sidestream sources include ethylene glycol, diethylene glycol, triethylene glycol and higher

homologs or mixtures thereof. The similar homologous series of propylene glycols can also be used. Glycols can also be generated in situ during preparation of the polyester polyols of the invention by depolymerization of polyalkylene terephthalates. For example, polyethylene terephthalate yields ethylene glycol.

It will of course be appreciated that mixtures of polyether polyols and polyester polyols can be used in manufacture of polyurethane and polyisocyanurate foams.

The hydrolytically stable siloxane-oxyalkylene block copolymers described below are also foam stabilizers for polyurethane and polyisocyanurate foam formulations containing such polyesters, polyamides, polyamines, and the like.

## ISOCYANATES

A variety of organic isocyanates can be employed for reaction with the organic compounds above described to provide polyurethane and polyisocyanurate foams. The organic polyisocyanates which can be used include aliphatic, cycloaliphatic and certain aromatic polyisocyanates, dimers or trimers of isocyanates and diisocyanates, polymeric diisocyanates, polyisothiocyanates and combinations thereof.

Preferred isocyanates are

1. alkyl or cycloalkyl polyisocyanates having at least two isocyanate groups, and in which the alkyl portion contains 2-6 carbon atoms; and
2. aromatic polyisocyanates containing at least 2 isocyanate groups, and at least two six-membered aromatic rings which are fused together or are joined by a carbon-carbon bond or are linked by a divalent linkage selected from the group consisting of alkylene groups of 1-6 carbon atoms, -O-, -CO-, $-CO_2-$, -S-, and $-SO_2-$. Such aromatic polyisocyanates preferably contain 2-20 rings, and most Preferably 2-10 rings. The rings are preferably phenyl groups.

Representative of the polyisocyanates are the diisocyanates such as hexamethylene-1, 6-diisocyanate, cyclohexane-1,4-diisocyanate, isomers of methylenediphenylene diisocyanate (MDI) such as diphenyl methane-4,4'-diisocyanate, 4,4'-diphenylenediisocyanate, 3,3'-dimethyl-4, 4'-diphenyldiisocyanate and 3,3'-dimethyldiphenylmethane-4,4'-diisocyanate; the triisocyanates such as polymethylenepolyphenyltri isocyanate; and the tetraisocyanates such as 4,4'-dimethyldiphenylmethane-2,2',5,5'-tetraisocyanate. Especially useful are polymethylene polyphenyl polyisocyanates commonly referred to as polymeric MID. The preferred polymethylene polyphenyl isocyanates desirably have a functionality of at least 2.1 and preferably 2.5 to 3.2. These preferred polymethylene polyphenylisocyanates generally have an equivalent weight between 120 and 180 and preferably have an equivalent weight between 130 and 145.

These isocyanates are prepared by conventional methods known in the art such as the phosgenation of the corresponding organic amine. The synthesis of polymethylenepolyphenyl isocyanates is described by Seeger et al., in U.S. Patent 2,683,730 and by Powers in U.S. Patent 3,526,652.

Prepolymers may also be employed in the preparation of the foams. These prepolymers are prepared by reacting an excess of organic polyisocyanate or mixtures thereof with a minor amount of an active hydrogen-containing compound as determined by the well-known Zerewitinoff test, as described by Kohler in "Journal of the American Chemical Society," 49,3181 (1927). These compounds and their methods of preparation are well known in the art. The use of any one specific active hydrogen compound is not critical hereto, rather any such compound can be employed herein.

The amount of isocyanate employed will depend upon the density of the urethane foam and the amount of crosslinking desired. In general, the total -NCO equivalent of the polyether should be such as to provide a ratio of 0.7 to 1.2 equivalents of -NCO per equivalent of active hydrogen, and preferably a ratio of about 0.9 to 1.1 equivalents. The polyester polyols can be combined with other polyols to produce polyurethane or polyisocyanurate foams. The polyester polyols can comprise about 5 to 100, preferably about 5 to 75, and more preferably about 20 to 50, weight percent of the total polyol content in the foam preparation. For polyisocyanurate manufacture, the ratio is usually higher than 1.5 equivalent of -NCO per equivalent of active hydrogen wherein the polyester polyol comprises about 5 to 100, and preferably about 50 to 100, weight percent of the total polyol content in the foam preparation.

## CATALYSTS

Catalysts that are suitable for accelerating the polyol-isocyanate reaction include amines and a wide variety of metal compounds, both inorganic metal compounds and metal compounds which contain organic groups. Particularly useful catalysts are tertiary amines and organotin compounds. All of the above catalysts can be used alone or in mixtures with one or more of the other such catalysts.

Among the organo-tin compounds that deserve particularly mention are stannous acylates such as stannous acetate, stannous octoate, stannous laurate, stannous oleate and the like; stannous alkoxides such as stannous butoxide, stannous 2-ethylhexoxide, and the like; dialkyl tin salts of carboxylic acids, e.g., dibutyltin diacetate, dibutyltin dilaurate, dilauryltin diacetate, and the like. Similarly, there can be used a trialkyltin hydroxide, dialkyltin oxide or dialkyltin chloride. Examples of these compounds include tributyltin hydroxidedibutyltin oxide, dilauryltin oxide, dibutyltin dichloride, and the like.

The tertiary amines which are useful as catalysts in the formulations of this invention include tertiary amines substantially unreactive with isocyanate groups and tertiary amines containing active hydrogen atoms reactive with isocyanate groups. Typical tertiary amines which are substantially unreactive with isocyanate groups include 2,2-bis(dimethylaminoethyl)ether, tributylamine, trioctylamine, N-ethylmorpholine, N-octadecylmorpholine (N-Cocomorpholine), N,N,N',N'-tetramethylethylenediamine, N,N,N',N'-tetramethyl-1,3-propanediamine, triethylenediamine (1,4-diazabicyclo[2.2.2]-octane), triethylenetetramine, N,N-dimethylcyclohexylamine, N,N-diethylbenzylamine, N-ethylpiperidine, alpha-methylbenzyldimethylamine, dimethylhexadecylamine, dimethylcetylamine, and isocyanates and metal compounds containing tertiary nitrogen atoms.

Typical tertiary amines containing active hydrogen atoms reactive with isocyanate groups include dimethylethanolamine, dimethylaminoethoxyethanol, triethanolamine, triisopropanolamine, N-methyldiethanolamine, N-ethyldiethanolamine, polyoxyalkylene polyol polymers and copolymers of alkylene oxides, such as propylene oxide, ethylene oxide, homopolymers, copolymers and mixtures thereof started with triethanolamine, triisopropanolamine, ethylenediamine, ethanolamine, diethylenetriamine, and the like. Still other tertiary amines containing active hydrogen atoms reactive with isocyanate groups include polyester based on polyols such as illustrated above including triethanolamine, triisopropanolamine, N-alkyl diethanolamines, and the like, as well as polycarboxylic acids containing tertiary nitrogen atoms.

Other catalysts suitable for use in the formulations of this invention include metal organic compounds of lead, arsenic, antimony, and bismuth compounds characterized by the presence therein of a direct carbon-to-metal bond; organic halides of titanium; the inorganic halides of tetravalent tin, arsenic, antimony, bismuth and titanium; polystannates; tin, titanium and copper chelates; and mercury salts. Representative members of this class of catalysts are stannic chloride, stannic bromide, stannic iodide stannic fluoride, isopropoxysteoroxy polystannate, hydroxysteoroxy polystannate, tin chelates such as bis(acetylacetone)tin dichloride, arsenic trichloride, antimony trichloride, antimony pentachloride, antimony tributoxide, bismuth trichloride, titanium tetrachloride, bis(cyclopentadienyl)-titanium difluoride, titanium chelates such as octyleneglycol titanate, dioctyl lead dichloride, dioctyl lead diacetate, dioctyl lead oxide, trioctyl lead chloride, trioctyl lead hydroxide, trioctyl lead acetate, copper chelates such as copper acetylacetonate, mercurous chloride, mercuric acetate, tributyl arsine, triphenyl stibine, trioctylbismuthine, octylarsine, phenyldimercaptoarsine, butyldichlorobismuthine, triphenylstibine iodide cyanide, isoamylarsenic disulfide, triethylstibine oxide, octylarsonic acid, dibutylstibinic acid, phenylarsenic dilaurate, butylbismuth dibenzenesulfonamide, arsenopropane, and bis(dibutylbismuth) oxide.

In the preparation of polyisocyanurate rigid foams, any catalysts known to catalyze the trimerization of isocyanates to form isocyanurates, and to catalyze the reaction of isocyanates groups with hydroxyl groups to form polyurethanes, can be employed. One preferred type of catalyst is a mixture of a tertiary aminophenol such as 2,4,6-tris(dimethylaminomethyl)phenoland an alkali metal carboxylate, such as potassium-2-ethyl hexanoate.

The amount of catalyst to be employed in urethane foam formulations is well understood by persons skilled in the urethane resin foam art. In general, the amount of amine catalyst employed is between about 0.05 and 3 parts by weight per 100 parts by weight of polyol and the amount of organo-metal catalysts is between about 0.05 and about 0.8 part by weight per 100 parts by weight of polyol. Tertiary amine catalysts are preferably used in amounts between about 0.1 and 1.5 parts by weight per 100 parts by weight of polyol and organo-tin catalysts are preferably used in amounts of about 0.2 part by weight per 100 parts by weight of polyol.

## BLOWING AGENTS

In order to obtain the typical foam structure, use is made of one or more chemical or physical blowing agents. As chemical blowing agent, $H_2O$ is usually applied to liberate "in situ" $CO_2$ by reaction with isocyanate. Inert gases, low boiling organic liquids, or fluorinated organics are used as physical blowing agents.

Hydrochlorofluorocarbons such as 1,1-dichloro-2,2,2-trifluoroethane (HCFC-123), 1,1-dichloro-1-fluoroethane (HCFC-141b), and monochlorodifluoromethane (HCFC-22) are the preferred blowing agents for

the foams of this invention. Mixtures of these with each other or with fluorocarbons such as trichloromonofluoromethane (CFC-11) may also be employed.

Other fluorinated materials which may be employed as auxilliary blowing agents in the invention are dichlorofluoromethane (HCFC-21), 1-chloro-1-fluoro-2,2,2-trifluoroethane (HCFC-124), 1-chloro-2-chloro-2,2-difluoroethane (HCFC-132b), 1-chloro-2,2,2-trifluoroethane (HCFC-133a), dichlorodifluoromethane (CFC-12), difluorochloromethane, trifluoromethane, monochlorotrifluoromethane, monochloropentafluoroethane, 1,1-difluoroethane, 1,1,1-trichlorodifluoroethane, 1-chloro-1,1-difluoro-2,2-dichloroethane, 1-chloro-1,1-difluoroethane, trifluorochloropropane, 1,1,1-trifluoro-2-chloro-2-fluoro-3,3-difluoro-4,4,4-trifluorobutane, mixtures of such materials, and the like.

Inert gases such as nitrogen, carbon dioxide, methane, helium and argon or low boiling organic liquids such as methylene chloride, diethyl ether, isopropyl ether, n-pentane, cyclopentane, 2-methylbutane, methyl formate and mixtures thereof can also be used as auxilliary blowing agents.

The foaming agents are employed in an amount sufficient to give the resultant foam the desired bulk density, which is generally from 10 to 500 kg/m$^3$, preferably 20-60 kg/m$^3$. The foaming agent generally comprises from 1 to 30 and preferably from 5 to 20 weight percent of the composition.

When a blowing agent has a boiling point at or below ambient, it is maintained under pressure until mixed with other components. The capped silicone surfactants employed in this invention are believed to assist the retention of these volatile blowing agents in the reaction mixture and reduce the blowing agent loss attendant to foaming.

SURFACTANTS

The siloxane polyether copolymers useful in the formulations of this invention are block copolymers represented by the formula:

$$R_3SiO(\underset{R'}{\overset{R^\circ}{|}}{SiO})_r(\underset{R''O(C_mH_{2m}O)_nR'''}{\overset{R'}{|}}{SiO})_pSiR_3 \qquad (I)$$

In formula (I), the following definitions apply.

R° is a monovalent hydrocarbon group of 1-4 carbon atoms, preferably 1-2 carbons, and most preferably, methyl. A small percentage of the R° groups may be hydrogen, as the reactions forming the surfactant from starting materials containing Si-H groups may not always go to completion. There are not more than an average of three hydrogen atoms represented by R° in the copolymer, preferably less than one, and most preferably none.

R is a monovalent hydrocarbon group of 1 to 12 carbon atoms, or a polyether group $-R''O(C_mH_{2m}O)_nR'''$. It is preferably an alkyl group of 1-4 carbon atoms, and most preferably methyl. All three R groups on a given silicon atom are not necessarily the same. For example, two may be alkyl groups and the third may be a capped polyether.

Illustrative of the monovalent hydrocarbon groups that are represented by R in Formula 1 are the alkyl groups (for example, the methyl, ethyl, isopropyl, octyl and dodecyl groups); the aryl groups (for example, the phenyl and naphthyl groups); the aralkyl groups (for example, the benzyl and the phenylethyl groups); the alkaryl groups such as the styryl, tolyl and n-hexylphenyl groups, and the cycloalkyl groups (for example, the cyclohexyl group).

R and R° may also be functionalized hydrocarbon groups such as the chloropropyl, heptafluoroisopropyl, cyanoethyl and hydroxybutyl groups.

R' is a monovalent hydrocarbon group of 1-4 carbon atoms, preferably 1-2 carbons, and most preferably, methyl.

R'' is a divalent hydrocarbon moiety of 2-12 carbon atoms. Illustrative of the divalent hydrocarbon groups represented by R'' in Formula 1 are the alkylene groups (such as the methylene, ethylene, propylene, butylene, 2,2-dimethyl-1,3-propylene and decylene groups), the arylene groups (such as the phenylene and p,p'-diphenylene groups), and the alkarylene groups (such as the phenyl ethylene group).

Preferably, the divalent hydrocarbon group is an alkylene group containing from two to four successive carbon atoms, examples of which are the propargyl, allyl, and methallyl groups. These divalent hydrocarbon groups are linked to the siloxane portion of the molecule by a silicon-to-carbon bond, and to the oxyalkylene portion of the molecule by a carbon-to-oxygen bond.

The polyether portion of the molecule is represented by $-(C_mH_{2m}O)_n-$ and may be made up of oxyalkylene units of one type or of more than one type. Illustrative of the oxyalkylene groups that are represented by $-(C_mH_{2m}O)_n-$ in Formula 1 are the oxyethylene, oxy-1,2-propylene, oxy-1,3-propylene , oxy-2,2-dimethyl-1,3-propylene, oxy-1,10-decylene groups, and the like. Other oxyalkylene units may also be employed.. At least 25 weight percent of the groups represented by $-(OC_mH_{2m})_n-$ must be oxyethylene groups.

Preferably, the silicone copolymers for rigid polyurethane and polyisocyanurate foams are prepared from polar oxyethylene-rich polyethers containing >50 weight percent ethylene oxide residues. The polyether portion of the copolymer should have a molecular weight between 250 and 2500.

R''' is a capping group which typically is a monovalent organic group of 1-8 carbon atoms or an organosilyl group. Examples of such groups are methyl, isopropyl, t-butyl, benzyl, methoxyethyl, acetoxy, and trialkylsilyl. Some percentage, typically less than 20 mole %, of the groups R''' may be hydrogen, as the reaction to cap the original hydroxyl-terminated polyether may not always go to completion.

The subscript m is an integer having a value of 2 in the case of oxyethylene and 3 in the case of oxypropylene, as illustrated above. The subscript n is a number having a value of at least 1, and preferably at least 4.

The subscript r has a value of 0 to 100, and the subscript p has a value of at least 1 and a maximum of about 100.

A preferred class of siloxane-oxyalkylene copolymers that can be employed as foam stabilizers in this invention are those represented by the formula (2) in which the polyethers are attached along the middle of the siloxane chain.

$$Me_3SiO(Me_2SiO)_r(\underset{\substack{|\\(CHR^*)_zO(C_2H_4O)_x(C_3H_6O)_yR'''}}{\overset{\substack{Me\\|}}{Si}}O)_pSiMe_3 \qquad (2)$$

wherein Me is a methyl group, r has a value from 3 to 70 inclusive, p has a value from 1 to 20 inclusive, z is 2 or 3, x has a value from 1 to 25 inclusive (preferably from 4 to 25 inclusive), y has a value from 0 to 15 inclusive, R* is methyl or hydrogen, R''' is hydrogen or an alkyl group containing from 1 to 4 carbon atoms, and at least 25 weight percent (preferably at least 50 weight percent) of the groups represented by $-(OC_2H_4)_x(OC_3H_6)_y-$ are oxyethylene groups.

Specific siloxane-oxyalkylene copolymers that can be employed as foam stabilizers in this invention are those having the average formulae:

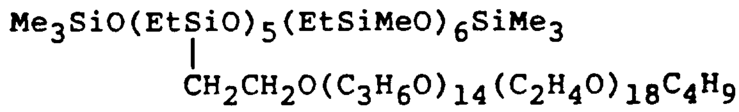

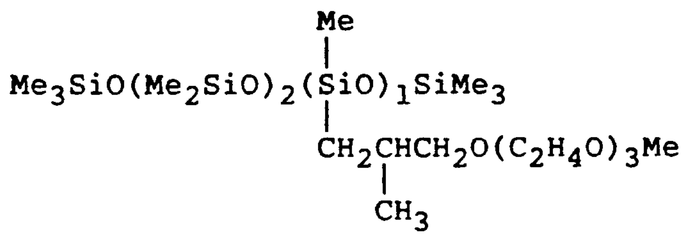

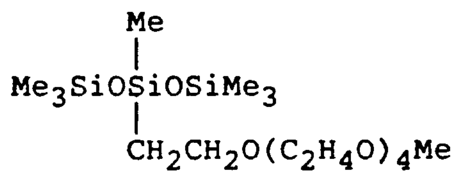

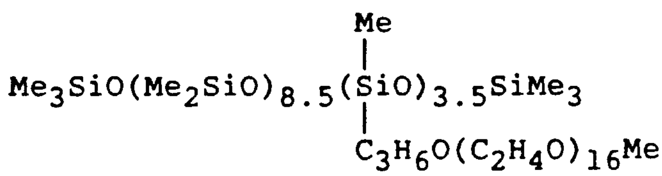

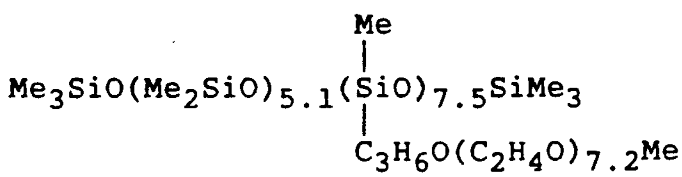

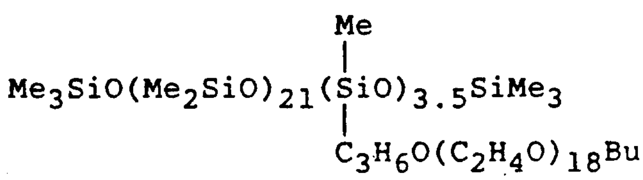

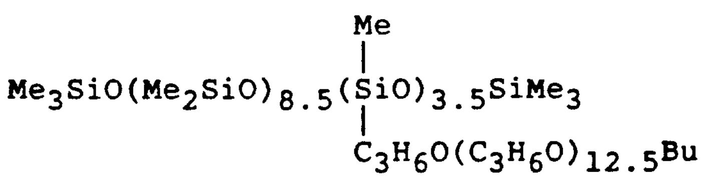

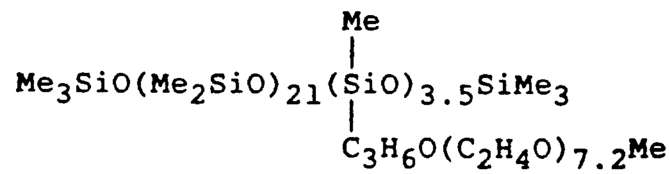

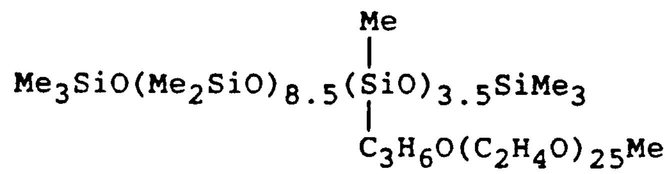

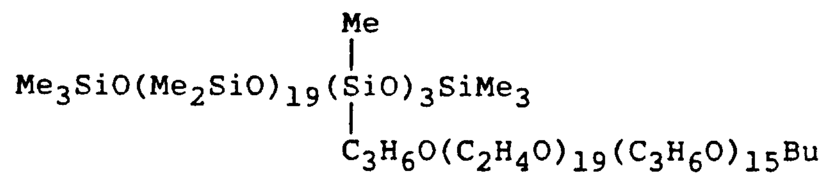

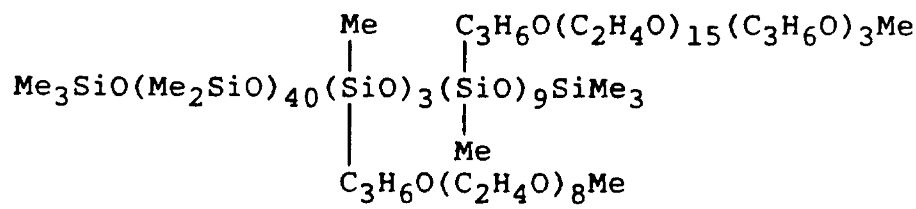

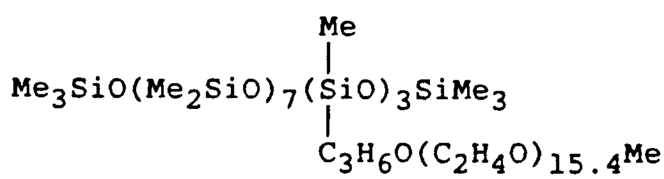

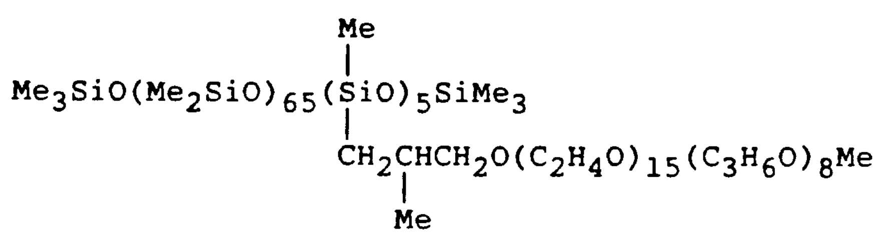

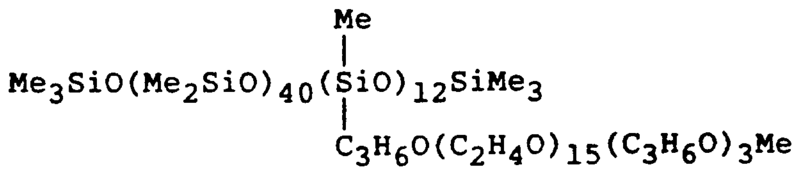

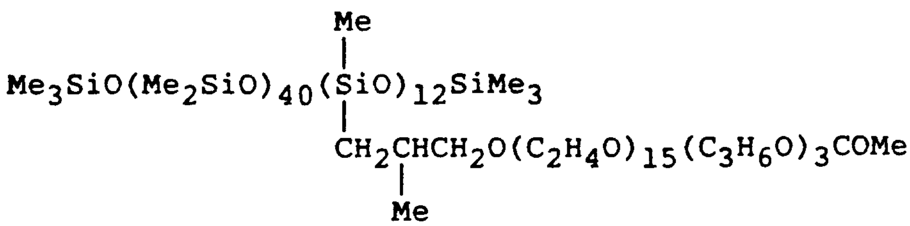

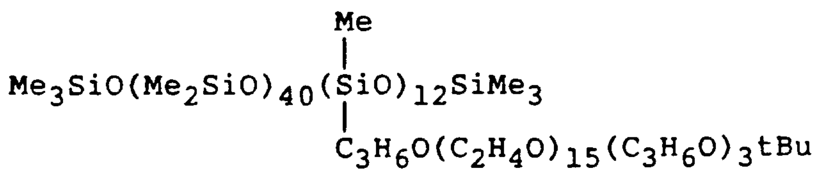

Another preferred class of siloxane-oxyalkylene copolymers that can be employed are those represented by formula (3)

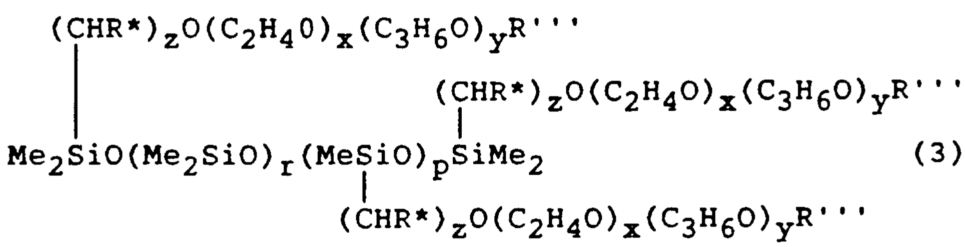
(3)

Wherein r, p, z, x, y, R* and R''' have the same meaning as described herein above.

Specific examples of such structures that can be employed as foam stabilizers in this invention are for example as follows:

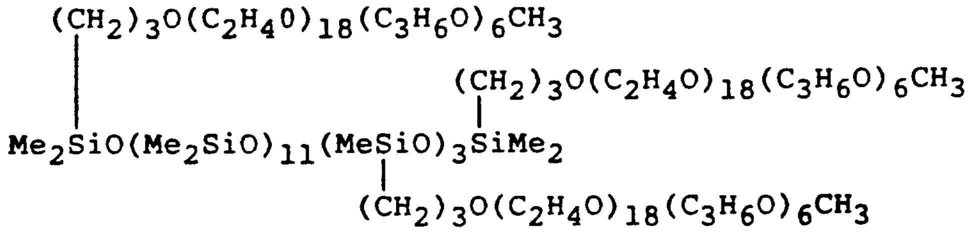

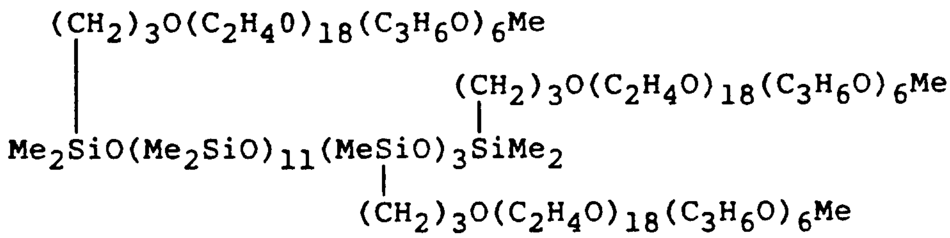

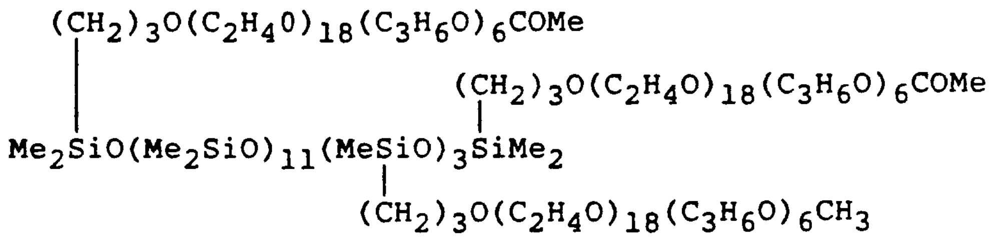

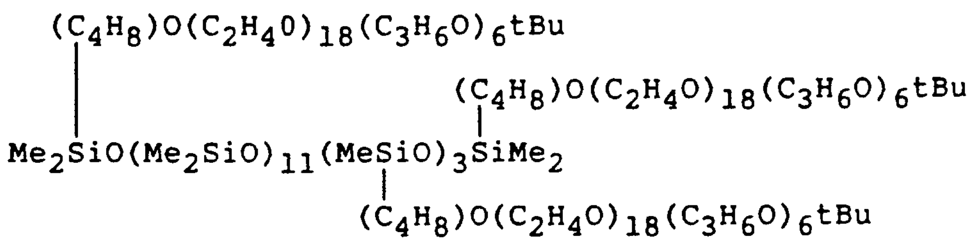

In the above formulae "Me" represents the methyl group, "Et" represents the ethyl group, "Bu" represents the butyl group, $C_4H_8$ represents the methallyl group and "COMe" represents the acetoxy group.

The foam stabilizers of this invention are hydrolytically stable siloxane-oxyalkylene block copolymers. These copolymers contain capped oxyalkylene units. The silicone copolymers should have a molecular weight from about 3000 to about 15000. Within this molecular weight range, the preferred foam stabilizers have a siloxane block content which varies from about 10 weight percent (based on the total weight of siloxane and oxyalkylene blocks in the copolymer) to 50 weight percent. Additionally, the preferred capped siloxane copolymers have a siloxane chain length, i.e., (p + r) in formulae 1 or 2, of 15-70 and siloxane functionality, i.e. ratio of r/p, of 2-10. Optimum silicone surfactant performance in HCFC-blown rigid foams depends not only on the presence of capped polyether chains, but also on these structural variables. A capped silicone surfactant does not always outperform an uncapped one in terms of foam processing or properties. However, when two surfactants differ only in the presence of a polyether capping group on one of them, the capped surfactant provides foam processing and properties benefits not realized with the uncapped one.

The siloxane-oxyalkylene copolymers useful as stabilizers in the foam formulations of this invention can be prepared by several convenient methods which are well known to those skilled in the art. For example, they can be produced by forming a mixture of a siloxane polymer containing a silicon-bonded halogen-substituted monovalent hydrocarbon group and an alkali metal salt of an oxyalkylene polymer, and heating the mixture to a temperature sufficiently elevated to cause the siloxane polymer and the salt to react to produce the copolymer. This process is referred to herein as the "metathesis process" and it involves a metathesis reaction that can be illustrated by the following equation:

```
               |
SILOXANE-(OSiR"X) + (MO)-OXYALKYLENE          ————————>
               |

               |
SILOXANE-(OSiR"O)-OXYALKYLENE + MX
               |
```

wherein R" is a divalent hydrocarbon group, X is a halogen atom, M is an alkali metal cation, SILOXANE denotes a siloxane block, and OXYALKYLENE denotes an oxyalkylene block.

The copolymers useful in this invention can also be produced by another process, termed the "addition process", that involves forming a mixture of a siloxane polymer containing a hydrogen-siloxy group

```
(i.e., a  |
        -SiO-    group),
          |
          H
```

an oxyalkylene polymer containing an alkenyloxy group at one end with a capping group (described in the formula 1 as R''') at the other end, and a platinum containing catalyst, and heating the mixture to a temperature sufficient to cause the siloxane polymer and the oxyalkylene polymer to react to produce the copolymer. The latter-mentioned reaction is an addition reaction, commonly called hydrosilylation, that can be illustrated by the following equation:

```
                             |
OXYALKYLENE-(OR2) + [HSiO-]SILOXANE      ————————>
                             |

OXYALKYLENE-[OR3SiO-]SILOXANE
```

wherein OXYALKYLENE and SILOXANE have the meaning defined for Formula 3, $OR^2$ is an alkenyloxy group (such as the methallyloxy, vinyloxy and the allyloxy groups) and $R^3$ is an alkylene group containing at least two successive carbon atoms. The addition process is applicable to the production of those copolymers of this invention containing a siloxane block that is linked to an end capped-oxyalkylene block by an alkylene group that has at least two successive carbon atoms (e.g., an ethylene, 1,2-propylene or 1,2-butylene group and the like).

It is understood that polar and non-polar end caps are embodied in the oxyalkylene polymers in this invention. These include alkoxy, acetoxy, hydroxy, acetal, carbamate, and tetrahydropyranyl groups. Methoxy, butoxy and acetoxy end groups are preferred.

The process for the capping of polyethers is well known of the art. Alkyl capping of polyethers is described in US patents 3,507,927; 4,046,702; 4,587,365; 4,522,740; 4,548,729 and British Patent 1,566,770 among others. The capping of hydroxyl groups with the tertiary butyl group is disclosed in a number of patents and journal publications; For example, US patent 4,182,913; Hydrocarbon Processing, vol.56 (1977) p.98, p.185; Oil and Gas Journal, vol.77 (1979) p.7 and Tetrahedron Letter, vol.29 (1988) p.2951. Capping of polyethers with dihydropyran and vinyl end ethers is disclosed in US patents 3,794,673 and 3,907,851, and in Polymer Bulletin, vol.20 (1988) p.455.

It is well known to those skilled in the art that polyether capping does not always occur with 100 mole % conversion of the hydroxyl groups. For example, while acetoxy, trifluoroacetoxy and t-butoxy capping usually occur with > 99 mole % conversion of primary hydroxyl groups, conversion may be < 90 mole % for secondary hydroxyl groups. Additionally, methoxy capping is seldom > 95 mole %, and most usually 80-90 mole %, irrespective of the type of hydroxyl group. Thus, it is to be understood that the capped polyethers specified as useful in making the capped silicone copolymers claimed in this invention are likely to contain modest amounts of uncapped polyethers, and the capped polyethers, and the capped silicone copolymers are likely to have uncapped polyether chains attached to the siloxane chains.

Useful catalysts for the addition process contain from 0.001 to 5.0 weight percent based on the reactants of transition metal catalysts like platinum. Especially useful catalysts are heterogeneous and homogeneous transition metal catalysts, amongst them platinum supported on carbon or on the gamma polymorph of alumina, zerovalent olefin platinum complexes, and chloroplatinic acid. The process can be conducted with or without solvent. Liquid organic compounds in which the starting polymers are mutually soluble, such as toluene or isopropanol or diethylene glycol can be used in the addition process. A solventless process is described in U.S. Patent No. 4,847,398. When uncapped polyethers are employed in the hydrosilylation synthesis of siloxane-polyether copolymers, acetal linkages can form in the copolymers. U.S. patent 4,847,398 (column 4, lines 1-13) discusses the origin of acetal formation and discloses the use of carboxylic acid salts to forestall this reaction. The reaction temperature employed can vary from 25°C to 200°C.

The amount of siloxane-oxyalkylene block copolymer employed as a foam stabilizer in the formulations of this invention can vary over wide limits from about 0.1 weight percent to 10 weight percent or greater. Weight percentages are based on the total weight of the foam formulation, that is, the polyol, isocyanate, catalyst, blowing agent, water (if present), foam stabilizer and other additives. Preferably, the amount of siloxane block copolymer present in the foam formulations varies from about 0.5 weight percent to about 2.0 weight percent.

In addition to the stabilization effect, the silicone copolymers also contribute to the emulsification of all the foam formulation components in order to optimize the homogeneity of the system. The silicone surfactant also nucleates the formation of small bubbles, controls the size distribution of these bubbles and contributes to foam processing by making the reaction mixture more flowable. The siloxane-copolymer compositions of this invention provide the benefits of a narrow distribution of small closed bubbles and virtually no foam inhomogeneity in PUR, PIR and mixed PUR/PIR rigid foams expanded with HCFC-blowing agents such as HCFC-123, HCFC-141b and HCFC-22. It is to be understood that the siloxane copolymer may be employed neat as prepared, or diluted with a suitable solvent (e.g., excess oxyalkylene polyether, or capped nonylphenol ethoxylates) without significant diminuation of these benefits.

DEFINITIONS AND ABBREVIATIONS

SR-321: an uncapped silicone surfactant sold by Union Carbide Chemicals and Plastics (Europe) S.A.
SR-234: a capped silicone surfactant sold by Union Carbide Chemicals and Plastics (Europe) S.A.
pphp = parts per hundred parts of polyol.
C-178: an amine catalyst sold by Union Carbide Chemicals and Plastics Co., Inc.

% EO = weight percent ethylene oxide.
hum. = humidity.
M = $(CH_3)_3SiO_{1/2}$,
D = $(CH_3)_2SiO_{2/2}$, and
D' = $CH_3(H)SiO_{2/2}$
Index = a measure of the storchiometric balance of isocyanante - reactive groups.

Experimental

The foam performances of the different siloxane-oxyalkylene copolymers were evaluated as follows.

Flow index was measured, in the laboratory with a metallic tube (6cm diameter,180cm height) lined with a polyethylene film in order to avoid any release agent interference. Flow index is defined by the ratio:

$$\frac{\text{Height of the foam (cm)}}{\text{Weight of the foam (g)}}$$

A high value of flow index is desirable.

Thermal conductivities were measured with an Anacon 88 instrument. The measurements were performed on 20cm x 20cm x 3.5cm samples cut from a 30cm x 30cm x 10cm moulded part one day after the foams were made. Aged thermal conductivities were measured after 4 weeks ageing in an oven at 70°C. Low thermal conductivity values are desirable. Measurement units are milliwatts per meter per degree Kelvin.

To evaluate foam cell size, thin slices of the foams were cut (in the direction parallel to rise) with a microtome and an enlarged photograph (x36) was obtained from a microfilm reader. An image analysis of the pictures was performed in two directions, parallel and perpendicular to the foam rise direction, in order to determine the cell size distribution and to check the isotropy of the foams. Average cell size values are given in microns. A BAUSCH & LOMB image analyser, interfaced with a HP-85 calculator, was used to measure cell size and cell size distribution. Small foam cell size is preferred.

Compressive strength was evaluated according to the French standard NF-T-56-101. The measurements were made on free rise foams in the directions parallel and perpendicular to rise. Results are expressed in kilopascals (KPa). High compressive strength values are desirable.

The evaluation of dimensional stability was based on the international standard ISO 2796. The measurements were performed on free rise and molded samples (free rise density: 22.4 kg/$m^3$, molded density: 32.3 kg/$m^3$). Ageing of the samples was done at 70 ° C, 95% humidity and at -20 ° C. Dimensional stability at 20 ° C was measured only for the higher density samples. The percentage of variation of the volume of the samples is a measure of the dimensional stability at the given temperatures. Low volume changes are desirable.

The following examples illustrate this invention.

EXAMPLE 1

This example illustrates the preparation of one of the polyhydrogensiloxane fluids used in this invention. The polyhydrogensiloxane fluids were equilibrated by conventional procedures. To prepare $MD_{32.8}D'_7M$, a mixture of 14.8 g of $MD'_{40}M$, 80.7 g of cyclic octamethylpolysiloxane ($D_4$), and 4.7 g of hexamethyldisiloxane (MM) was equilibrated 12 h in presence of 1.5 g of sulfuric acid at room temperature. Then, after cooling at 10 ° C with ice, the mixture was neutralized with 4.5 g sodium bicarbonate for 6 h under agitation.

All polyhydrogensiloxane fluids of this invention were prepared in a similar manner.

EXAMPLE 2

The following example demonstrates the synthesis of a silicone copolymer based on the reaction of a polyhydrogensiloxane with an uncapped polyether.

To a 4-neck, round bottom flask, equipped with a stirrer, Friedrich condenser, a temperature-controller and a sparge tube, the following materials were charged: 70.1 grams of the allyl-started uncapped polyether containing 75 wt % ethylene oxide and 25 wt % propylene oxide (890 MW) of aqueous pH 5.5 adjusted by hydrochloric acid addition, 29.9 grams of equilibrated organohydrogenpolysiloxane (SiH) fluid having nominal $MD_{32.8}D'_7M$ structure, and 42.9 grams of toluene. The flask contents were agitated and heated to 90 ° C reaction temperature with a light nitrogen sparge. At the 90 ° C temperature, the reaction was catalyzed with 0.17 cc of 5% chloroplatinic acid solution in ethanol. Within 1 minute the reaction exothermed ( + 12.3 ° C). After 10 minutes the reaction was completed and no SiH could be detected by the usual alkaline alcohol test. Next were added 4.7 g of monoethyleneglycol (8% of the allylpolyether charge) and 0.5 ml of acetic acid, the temperature was adjusted at 80 ° C for one hour for the acetal decomposition (Acetals cause crosslinking leading to gelation. See U.S.A. 4,847,398). The product was then stripped to remove the toluene and was filtered.

Copolymers 1-4, were synthesized according to this method.

EXAMPLE 3

The following example demonstrates the synthesis of a silicone copolymer based on the reaction of a polyhydrogensiloxane with a capped polyether.

In a manner similar to example 2, to a 4-neck, round bottom flask, equipped with a stirrer, Friedrich condenser, a temperature-controller and a sparge tube, the following materials were charged: 72.8 grams of the methoxy capped allyl started polyether containing 75 wt % ethylene oxide and 25 wt % propylene oxide (890 MW), 27.2 grams of equilibrated organohydrogenpolysiloxane (SiH) fluid having nominal $MD_{32.8}D'_7M$ structure, and 42.9 grams of toluene. The polyether was 84 mole % methoxy capped. The flask contents were agitated and heated to 90 ° C reaction temperature with a light nitrogen sparge. At the 90 ° C temperature, the reaction was catalyzed with 0.17 cc of 5% chloroplatinic acid solution in ethanol. Within 1 minute the reaction exothermed ( + 13.1 ° C). After 10 minutes the reaction was completed and no SiH could be detected. The product was then stripped to remove the toluene and was filtered.

Copolymers 5-8, were prepared according to this method.

EXAMPLE 4

The following example illustrates the solventless synthesis of capped and uncapped silicone copolymers.

The copolymers numbered 9-20 (shown in Table I), were synthesized in the absence of added solvent, using sodium propionate to prevent acetal formation, as described in US Patent 4,847,398. The weight of sodium propionate was 0.1 % of the polyether weight. Weights of SiH fluids and polyethers employed are shown in Table I.

In each synthesis, the SiH fluid, polyether and sodium propionate were stirred and heated to 80 °C in a 3-neck 250 ml flask fitted with a thermometer, mechanical stirrer and Friedrich condenser. A nitrogen sparge was maintained during the heat-up. When the temperature of the reaction mixture was stabilized at 80 °C, 25 ppm of chloroplatinic acid (5% solution in ethanol) was injected to catalyze the hydrosilylation. Following the exotherm, the reaction mixture was stirred at 100 °C for an additional 20 minutes. Thereafter, it was cooled to room temperature, pressure filtered and stored for subsequent foam preparation.

The methoxy capped polyethers were 83-86 mole % capped; the acetoxy and t-butoxy polyethers were >95 mole % capped.

Several copolymers were prepared in the above described manners (see Table I). The following table summarizes the different polyhydrogensiloxane structures as well as the different polyethers used.

Table I
Description of Copolymers

| COPOLYMER # | SiH FLUID STRUCTURE | SiH FLUID WEIGHT USED (gm) | ALLYL POLYETHER % EO | ALLYL POLYETHER MOLECULAR WEIGHT | ALLYL POLYETHER CAPPING GROUP | ALLYL POLYETHER WEIGHT USED (gm) |
|---|---|---|---|---|---|---|
| 1 | $MD_{32.8}D'_{7}M$ | 29.9 | 75 | 890 | NONE | 70.1 |
| 2 | $MD_{59.8}D'_{7}M$ | 41.4 | 75 | 890 | NONE | 58.6 |
| 3 | $MD_{29.2}D'_{11.5}M$ | 20.6 | 75 | 890 | NONE | 79.4 |
| 4 | $MD_{56.2}D'_{11.5}M$ | 30.2 | 75 | 890 | NONE | 69.9 |
| 5 | $MD_{32.8}D'_{7}M$ | 27.2 | 75 | 866 | OMe | 72.8 |
| 6 | $MD_{59.8}D'_{7}M$ | 38.3 | 75 | 866 | OMe | 61.7 |
| 7 | $MD_{29.2}D'_{11.5}M$ | 18.5 | 75 | 866 | OMe | 81.5 |
| 8 | $MD_{56.2}D'_{11.5}M$ | 27.5 | 75 | 866 | OMe | 72.5 |
| 9 | $MD_{20}D'_{3.2}M$ | 34.7 | 75 | 750 | NONE | 59.0 |
| 10 | $MD_{20}D'_{3.2}M$ | 25.2 | 75 | 792 | OAc | 45.2 |
| 11 | $MD_{20}D'_{3.2}M$ | 34.4 | 75 | 764 | OMe | 59.2 |
| 12 | $MD_{20}D'_{3.2}M$ | 17.3 | 75 | 806 | Ot-Bu | 31.6 |
| 13 | $MD_{45.2}D'_{5.1}M$ | 40 | 75 | 750 | NONE | 52.2 |
| 14 | $MD_{45.2}D'_{5.1}M$ | 38.9 | 75 | 792 | OAc | 53.6 |
| 15 | $MD_{45.2}D'_{5.1}M$ | 39.7 | 75 | 764 | OMe | 52.5 |
| 16 | $MD_{45.2}D'_{5.1}M$ | 38.5 | 75 | 807 | Ot-Bu | 54.0 |
| 17 | $MD_{45.2}D'_{5.1}M$ | 40.5 | 100 | 693 | NONE | 38.7 |
| 18 | $MD_{45.2}D'_{5.1}M$ | 39.1 | 100 | 735 | OAc | 40.0 |
| 19 | $MD_{45.2}D'_{5.1}M$ | 39.9 | 100 | 706 | OMe | 39.3 |
| 20 | $MD_{45.2}D'_{5.1}M$ | 38.7 | 100 | 749 | Ot-Bu | 40.6 |

Table I (continued)

| COPOLYMER # | SiH FLUID STRUCTURE | SiH FLUID WEIGHT USED (gm) | ALLYL POLYETHER % EO | ALLYL POLYETHER MOLECULAR WEIGHT | ALLYL POLYETHER CAPPING GROUP | ALLYL POLYETHER WEIGHT USED (gm) |
|---|---|---|---|---|---|---|
| 21 | $MD_{15}D'_{5.5}M$ | 19.5 | 100 | 693 | NONE | 52.7 |
| 22 | $MD_{15}D'_{5.5}M$ | 18.6 | 100 | 735 | OAc | 53.8 |
| 23 | $MD_{15}D'_{5.5}M$ | 19.2 | 100 | 706 | OMe | 53.0 |
| 24 | $MD_{15}D'_{5.5}M$ | 20.0 | 100 | 806 | OMe | 72.0 |
| 25 | $MD_{15}D'_{5.5}M$ | 20.0 | 100 | 393 | NONE | 35.1 |
| 26 | $MD_{15}D'_{5.5}M$ | 20.0 | 100 | 406 | OMe | 36.0 |
| 27 | $MD_{43.2}D'_{6.8}M$ | 34.0 | 75 | 750 | NONE | 59.7 |
| 28 | $MD_{43.2}D'_{6.8}M$ | 20.6 | 75 | 792 | OAc | 38.5 |
| 29 | $MD_{43.2}D'_{6.8}M$ | 33.6 | 75 | 1556 | OMe | 122.7 |

EXAMPLE 5

This example illustrates the effect of polyether capping on the foam performance of siloxane copolymers in a HCFC-123 appliance formulation. Copolymers #1-20 inclusive (See Table I) were tested. The following formulation was used:

| | pphp |
|---|---|
| Sucrose polyether (Hydroxyl number = 350-450) blended with an aliphatic amine polyether (Hydroxyl number = 400-800) | 100 |
| HCFC-123 | 35 |
| Silicone Surfactant | 1.5 |
| Dimethylcyclohexylamine | 2 |
| Polymeric MDI | (105 Index) |

Free rise foams of density 22.4 $kg/m^3$, and molded foams of density, 32.3 $kg/m^3$ were made. The molded foams were made in a 30 cm x cm x 10 cm box.

Results

All of the silicone surfactants tested gave stable foams. Measured foam properties are displayed in Table II for copolymers #1-8, arranged as ordered pairs to show the effect of polyether capping on the foam properties.

The data show that flowability and thermal conductivity were not greatly influenced by the capping of the copolymers.

Compressive strengths, parallel or perpendicular to the direction of foaming, were higher for the capped copolymers than the uncapped ones. Additionally, the compressive strengths of the foams made with capped copolymers were generally higher than that of the foam from the reference surfactant, SR-321.

With the exception of the pair of copolymers #4 and #8, cell-sizes were smaller for foams made with capped copolymers.

The foams made with capped copolymers were more dimensionally stable under humid conditions (i.e., 70°C, 95% relative humidity) than those made with uncapped copolymers. Dimensional stability at -20°C was better for the molded foams than for the free rise foams. The data show that the capped copolymers #5 and #8 afforded foams with excellent cold age dimensional stability.

TABLE II

Influence of the capping of the copolymer on foam performance in the formulation of Example 5

| | | SR-321 | COP#1 | COP#5 | COP#2 | COP#6 | COP#3 | COP#7 | COP#4 | COP#8 |
|---|---|---|---|---|---|---|---|---|---|---|
| | | REF. | No CAPPING | Methoxy CAPPING | No CAPPING | Methoxy CAPPING | No CAPPING | Methoxy CAPPING | No CAPPING | Methoxy CAPPING |
| FLOWABILITY (cm/g) | | 0.836 | 0.864 | 0.859 | 0.868 | 0.846 | 0.806 | 0.804 | 0.860 | 0.859 |
| THERMAL CONDUCTIVITY (mW/MK) | INITIAL | 21.0 | 21.0 | 20.8 | 21.1 | 20.8 | 20.9 | 20.6 | 20.7 | 20.7 |
| | AGED | 25.1 | 24.4 | 24.6 | 24.7 | 24.6 | 24.8 | 24.4 | 24.5 | 24.5 |
| COMPRESSIVE STRENGTH (KPa) | PARALLEL | 177 | 167 | 203 | 141 | 176 | 151 | 179 | 150 | 186 |
| | PERPEN-DICULAR | 36 | 34 | 49 | 24 | 31 | 47 | 56 | 35 | 38 |
| CELL SIZE (microns) | PARALLEL | 169 | 163 | 143 | 155 | 133 | 165 | 148 | 127 | 143 |
| | PERPEN-DICULAR | 89 | 88 | 86 | 75 | 76 | 99 | 101 | 70 | 91 |
| DIMENSIONAL STABILITY (% VOLUME CHANGE) | 70°C 95% hum. | 3 | 6 | 1.6 | 8.2 | 1.7 | 2.7 | 1.5 | 3.9 | 1.9 |
| | -20°C | | | -0.1* | | | | | | -0.1* |

*density 32.3 $kg/m^3$. All other data are for 22.4 $kg/m^3$

Example 6

This example illustrates the advantageous performance of capped silicone surfactants over uncapped silicone surfactants in a HCFC-141b blown rigid foam formulation. The siloxane copolymers tested were #23, #24, #25, #26, #29 as described in Table I. The test formulatin is shown below. The free rise foam

density was 29.5 kg/$m^3$.

| | pphp |
|---|---|
| Sorbitol-based Polyol (Hydroxyl number = 490) | 100 |
| Water | 1.5 |
| Dimethylcyclohexylamine Catalyst | 2 |
| Silicone Surfactant | 1.5 |
| HCFC-141b | 34 |
| Polymeric MDI (Index = 105) | 120 |

Results

The uncapped copolymer #25 failed to give a stable fine-celled foam.

The capped copolymers #23, #24, #26 and #29 yielded stable, fine-celled foams, those foam copolymers #23, #24 and #29 being noticeably superior to that from copolymer #26. Measured foam properties are set forth in Table III.

TABLE III

| Performance of Capped Copolymers (23 and 29) in the HCFC-141b Formulation of Example 6 | | | |
|---|---|---|---|
| | | Capped Copolymer #23 | Capped Copolymer #29 |
| Flowability (cm/gm) | | 0.977 | 0.953 |
| Thermal Conductivity (mW/MK) | Initial<br>Aged | 24.5<br>24.8 | 29.4<br>29.6 |
| Compressive Strength (kPa) | Perpendicular<br>Parallel | 39.2<br>130.2 | 28.8<br>134.7 |
| Dimensional Stability (% vol) | 10 ° C<br>95% hum. | 5.5 | 5.9 |
| Cell Size (Microns) | Perpendicular<br>Parallel | 104<br>110 | 100<br>114 |

Example 7

This example illustrates the advantageous performance of capped silicone surfactants over uncapped silicone surfactants in a HCFC-22 based rigid foam formulation. The copolymers evaluated were uncapped: #21, 25, 27 and capped: #22, 23, 24 and 29. The test formulation was as follows:

| | pphp |
|---|---|
| Polyester Polyol (Hydroxyl number 250) | 100 |
| Silicone Surfactant | 2 |
| Water | 2 |
| C-178 | 2 |
| HCFC-22 | 12 |
| Polymeric MDI (Index 116) | 259 |
| HCFC-22 | 10 |
| Silicone Surfactant | 1 |

HCFC-22 and silicone surfactant were added to both the isocyanate and polyol components.

The molded foam density was 35 kg/$m^3$.

Results:

The uncapped copolymers #21, #25 and #27 gave foams with many voids, poor cell structure and a high content of open cells. The cut foams also showed pronounced streaks indicated that the polyol and isocyanate components were not fully compatibilized.

The capped copolymers #22, 23, 24, 28 and 29 all gave fine-celled foams. The foams from copolymers #22 and #24 had excellent dimensional stability, small cells of narrow distribution and showed no streaking. The properties of these foams are shown in Table IV.

TABLE IV
Performance of Capped Copolymers (#22, 24) in the HCFC-22 Formulation of Example 7

| | Copolymer 22 | Copolymer 24 |
|---|---|---|
| Initial Thermal Conductivity (mW/MK) | 19.8 | 19.8 |
| Compressive Strength (kPa) | | |
| Perpendicular | 87 | 83 |
| Parallel | 153 | 133 |
| Dimensional Stability (% vol.) | | |
| 70°C, 95% hum. | -2.5 | -2.0 |
| -20°C | 1.2 | 0.05 |
| Cell Size (Microns) | | |
| Parallel | 159 | 167 |
| Perpendicular | 135 | 130 |

## Claims

**1.** A composition for production of rigid polyurethane foam, comprising:

a) an organic compound containing at least 1.8 isocyanate-reactive groups per molecule;

b) an organic polyisocyanate selected from the group consisting of:

b1) alkyl or cycloalkyl polyisocyanates having at least two isocyanate groups, and in which the alkyl portion contains 2-6 carbon atoms; and

b2) aromatic polyisocyanates containing at least 2 isocyanate groups, and at least two six-membered aromatic rings which are fused together or are joined by a carbon-carbon bond or are linked by a divalent linkage selected from the group consisting of alkylene groups of 1-6 carbon atoms, -O-, -CO-, $-CO_2-$, -S-, and $-SO_2-$;

c) a catalytically effective amount of a catalyst capable of promoting formation of urethane bonds;

d) an effective amount of a hydrochlorofluorocarbon blowing agent; and

e) a foam stabilizing amount of a hydrolytically stable siloxane-oxyalkylene block copolymer surfactant containing capped hydroxyl groups in the oxyalkylene portion of the molecule, this surfactant being selected from the group consisting of materials falling within one of the general formulae

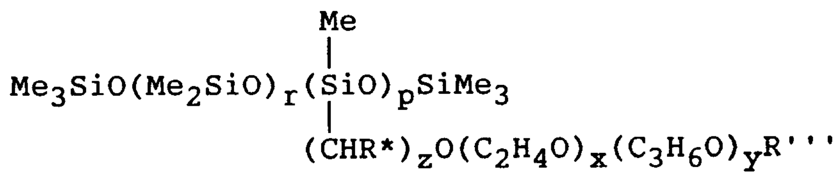

and

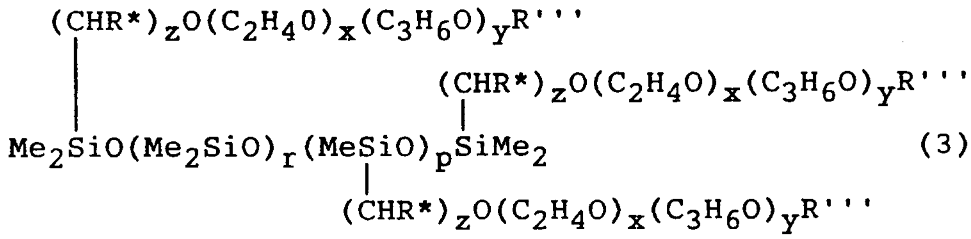

(3)

wherein:

the $-(CHR^*)_zO(C_2H_4O)_x(C_3H_6O)_yR'''$ portion of the surfactant molecule has a molecular weight in the range 250 to 866, Me is a methyl group, r has a value from 3 to 70 inclusive, p has a value from 1 to 20 inclusive, z is 2 or 3, x has a value from 1 to 18.34 inclusive, y has a value from 0 to 10.44 inclusive, R* is H or alkyl of 1-4 carbon atoms, R''' is H or an alkyl group containing from 1 to 4 carbon atoms or an acyl group of 1-4 carbon atoms, less than 20 mole percent of the R''' capping groups may be H, and at least 25 weight percent of the mass represented by $-(C_2H_4O)_x(C_3H_6O)_y-$ consists of oxyethylene groups.

**2.** The composition of claim 1, wherein said hydrochlorofluorocarbon blowing agent is selected from the group consisting of $CF_3CHCl_2$, $CCl_2FCH_3$, and $HCClF_2$.

**3.** The composition of claim 1, wherein in said surfactant containing capped hydroxyl groups, the subscript x has a value of from 4 to 18.34 inclusive.

**4.** The composition of claim 1, wherein in said surfactant containing capped hydroxyl groups, at least 50 weight percent of the mass represented by $-(C_2H_4O)_x(C_3H_6O)_y-$ are oxyethylene groups.

**5.** A method for production of rigid polyurethane foam, which comprises reacting and foaming a reaction mixture containing:

a) an organic compound containing at least 1.8 isocyanate-reactive groups per molecule;

b) an organic polyisocyanate selected from the group consisting of;

b1) alkyl or cycloalkyl polyisocyanates having at least two isocyanate groups, and in which the alkyl portion contains 2-6 carbon atoms; and

b2) aromatic polyisocyanates containing at least 2 isocyanate groups, and at least two six-membered aromatic rings which are fused together or are joined by a carbon-carbon bond or are linked by a divalent linkage selected from the group consisting of alkylene groups of 1-6 carbon atoms, -O-, -CO-, $-CO_2-$, -S-, and $-SO_2-$;

c) a catalytically effective amount of a catalyst capable of promoting formation of urethane bonds;

d) an effective amount of a hydrochlorofluorocarbon blowing agent; and

e) a foam stabilizing amount of a hydrolytically stable siloxane-oxyalkylene block copolymer surfactant containing capped hydroxyl groups in the oxyalkylene portion of the molecule, this surfactant being selected from the group consisting of materials falling within one of the general formulae

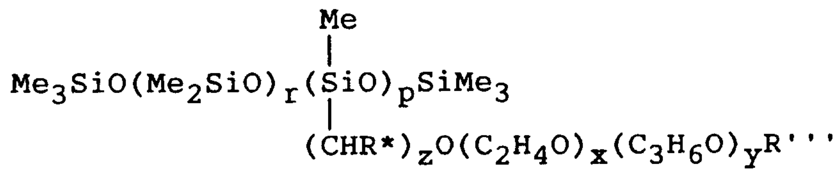

and

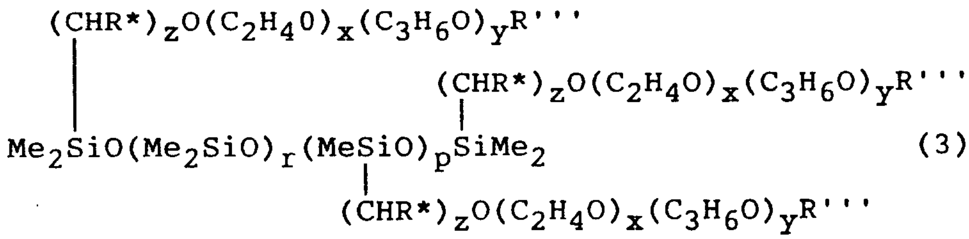

(3)

wherein:

the $-(CHR^*)_zO(C_2H_4O)_x(C_3H_6O)_yR'''$ portion of the surfactant molecule has a molecular weight in the range 250 to 866, Me is a methyl group, r has a value from 3 to 70 inclusive, p has a value from 1 to 20 inclusive, z is 2 or 3, x has a value from 1 to 18.34 inclusive, y has a value from 0 to 10.44 inclusive, R* is H or alkyl of 1-4 carbon atoms, R''' is H or an alkyl group containing from 1 to 4 carbon atoms or an acyl group of 1-4 carbon atoms, less than 20 mole percent of the R''' capping groups may be H, and at least 25 weight percent of the mass represented by $-(C_2H_4O)_x(C_3H_6O)_y-$ consists of oxyethylene groups.

**6.** The method of claim 5, wherein said hydrochlorofluorocarbon blowing agent is selected from the group consisting of $CF_3CHCl_2$, $CCl_2FCH_3$ and $HCClF_2$.

**7.** The method of claim 5, wherein in said surfactant containing capped hydroxyl groups, the subscript x has a value of from 4 to 18.34 inclusive.

**8.** The method of claim 5, wherein in said surfactant containing capped hydroxyl mass, at least 50 weight percent of the groups represented by $-(C_2H_4O)_x(C_3H_6O)_y-$ are oxyethylene groups.

**9.** A rigid polyurethane foam made from the composition of claim 1.

**10.** A rigid polyurethane foam made by the method of claim 5.

European Patent Office

# EUROPEAN SEARCH REPORT

Application Number

EP 92 11 6040

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | EP-A-0 397 378 (MITSUI TOATSU CHEMICALS INC.)<br>* claims 6,9,12,15 *<br>* page 8, line 21 - line 27 *<br>* page 8, line 44 - line 49 *<br>--- | 1-10 | C08J9/14<br>//C08L75:04,<br>C08L83/12 |
| Y | EP-A-0 142 689 (THE GOLDSCHMIDT AG.)<br>* claim *<br>* page 7, line 18 - page 8, line 7 *<br>--- | 1-10 | |
| Y | EP-A-0 152 878 (TH. GOLDSCHMIDT AG.)<br>* claim 1 *<br>* page 7, line 3 *<br>* page 7, line 5 *<br>----- | 1-10 | |
| | | | TECHNICAL FIELDS SEARCHED (Int. Cl.5 ) |
| | | | C08J |

The present search report has been drawn up for all claims

| Place of search | Date of completion of the search | Examiner |
|---|---|---|
| THE HAGUE | 14 DECEMBER 1992 | NIAOUNAKIS M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document